## Europäisches Patentamt
## European Patent Office
## Office européen des brevets

(19)

(11) Veröffentlichungsnummer : **0 166 469**
**B1**

(12) **EUROPÄISCHE PATENTSCHRIFT**

(45) Veröffentlichungstag der Patentschrift :
27.07.88

(51) Int. Cl.⁴ : **C 01 B 17/90**

(21) Anmeldenummer : **85200665.9**

(22) Anmeldetag : **27.04.85**

(54) **Verfahren zur Entfernung von Arsen aus Abfallschwefelsäure.**

(30) Priorität : **16.05.84 DE 3418241**

(43) Veröffentlichungstag der Anmeldung :
**02.01.86 Patentblatt 86/01**

(45) Bekanntmachung des Hinweises auf die Patenterteilung : **27.07.88 Patentblatt 88/30**

(84) Benannte Vertragsstaaten :
**BE DE FR GB IT SE**

(56) Entgegenhaltungen :
**DE-C- 1 159 399**
**FR-A- 692 595**
**FR-A- 773 390**
**FR-A- 983 507**
**FR-E- 65 233**
**SOVIET INVENTIONS ILLUSTRATED, Sektion Chemie, Woche E11, 28. April 1982, Zusammenfassungsnr. 21781 J01 M25, Derwent Publications Ltd., London, GB; & SU - A - 833 549 (TIN IND RES INST) 30.05.1981**

(73) Patentinhaber : **METALLGESELLSCHAFT AG**
**Reuterweg 14 Postfach 3724**
**D-6000 Frankfurt/M.1 (DE)**

(72) Erfinder : **Fach, Roland**
**Heinrich-von-Gemen-Strasse 51**
**D-4235 Schermbeck (DE)**
Erfinder : **Herbert, Rolf, Dr.**
**Erbecksfeld 8**
**D-4330 Mülheim (DE)**
Erfinder : **Homann, Reiner, Dr.**
**Königstrasse 30**
**D-4100 Duisburg 17 (DE)**
Erfinder : **Röhrborn, Hans-Joachim, Dr.**
**Terniepenweg 88**
**D-4133 Neukirchen-Vluyn (DE)**

(74) Vertreter : **Rieger, Harald, Dr.**
**Reuterweg 14**
**D-6000 Frankfurt am Main (DE)**

## Beschreibung

Die Erfindung betrifft ein Verfahren zur Entfernung von Arsen aus Abfallschwefelsäuren durch Fällung und Abtrennung des Arsensulfids.

Aus DE-C-605 443 ist es bekannt, die Reinigung verdünnter Schwefelsäuren durch Ausfällen der Verunreinigungen mittels Schwefelwasserstoff abspaltenden Reagenzien vorzunehmen und als Sulfide zu fällen. Insbesondere Arsen wird auf diese Weise als Arsensulfid gefällt. Die bekannten Schwierigkeiten der Abtrennung des voluminösen Sulfidniederschlages werden mit Hilfsmitteln angegangen, beispielsweise wird Elementarschwefel zugesetzt und das Gemisch über den Schmelzpunkt des Schwefels erhitzt, so daß die Säure von dem verschmolzenen Rückstand abgetrennt werden kann.

Mit den im Stand der Technik bekannten Verfahren hat man bisher aus stark sauren, Arsen enthaltenden Abfallsäuren mit hohem Schwefelsäuregehalt das Arsen nicht in dem aus Gründen der Umweltbelastung erforderlichen Maße entfernen können. Der Erfindung liegt daher die Aufgabe zugrunde, aus derartigen Abfallsäuren mit erheblichem Arsengehalt und hohem Gehalt an freier Schwefelsäure das Arsen zu entfernen oder auf solche Restgehalte zu erniedrigen, daß die Säure einer gefahrlosen Entsorgung oder einer Wiederverwertung zugeführt werden kann.

Die Erfindung löst diese Aufgabe mit einem Verfahren zur Entfernung von Arsen aus Abfallschwefelsäuren durch Fällen des Arsens als Sulfid mit einem Sulfidierungsmittel und Abtrennen des Arsensulfids unter Mitverwendung von Filtrationshilfsmitteln. Bei einem Verfahren der genannten Art besteht die Erfindung darin, daß unter Aufrechterhaltung einer $H_2S$-Atmosphäre als Sulfidierungsmittel eine wässrige Lösung eines Gemisches aus Natriumsulfid und Natriumhydrogensulfid verwendet wird, wobei die Menge des Natriumsulfids, auf den Arsengehalt der Abfallschwefelsäure bezogen, überstöchiometrisch eingestellt wird.

Mit dem Verfahren der Erfindung gelingt es, das Arsen in der Abfallschwefelsäure auf Restgehalte unter 0,1 mg/l und insbesondere unter 0,05 mg/l zu entfernen.

Die in dem erfindungsgemäßen Verfahren zur Reinigung gelangenden Säuren sind stark saure Abfallsäuren mit einem Gehalt an freier Schwefelsäure von 10 bis 30 %. Insbesondere eignen sich Abfallsäuren mit einem Gehalt an freier Schwefelsäure von 20 bis 25 %. Der Arsengehalt derartiger stark saurer Abfallschwefelsäuren beträgt im allgemeinen 1 bis 10 g As/l. Solche Abfallschwefelsäuren fallen beispielsweise in Kupferhütten bei der Kupferelektrolyse an. Weitere Abfallschwefelsäuren dieser Art sind die schwefelsauren Waschwässer der Gaswaschanlage einer Schwefelsäurefabrik. In diese Waschlösung gelangt das Arsen aus dem schwefelhaltigen Rohstoff. Je nach Arsengehalt des Rohstoffes und je nach Röstbedingungen finden sich in der sauren Waschlösung Arsengehalte bis zu 10 g As/l. Damit bereitet die Weiterverwendung und/oder die gafahrlose Entsorgung dieser Waschsäure erhebliche Schwierigkeiten.

Zur Durchführung der Erfindung wird zunächst der Arsengehalt der stark sauren Abfallsäure ermittelt. Der pH-Wert dieser Säuren ist kleiner als 1. Sodann wird der Säure, in kontinuierlichem oder diskontinuierlichem Verfahren, die Sulfidierungslösung zugeführt. Die Sulfidierungslösung wird gewonnen, indem eine wässrige Natriumsulfidlösung, deren Menge so gewählt wird, daß der Natriumsulfidanteil in Bezug auf den Arsengehalt der Abfallschwefelsäure überstöchiometrisch ist, mit Schwefelwasserstoff behandelt wird, so daß sich das Natriumsulfid zu etwa 75 bis 80 % zu Natriumhydrogensulfid umsetzt. Die Lösung des Gemischs aus etwa 20 bis 25 % Natriumsulfid und 75 bis 80 % Natriumhydrogensulfid, die darüber hinaus noch gelösten Schwefelwasserstoff enthält, wird bei Raumtemperatur der Abfallschwefelsäure kontinuierlich oder diskontinuierlich zugeführt. Bei kontinuierlicher Arbeitsweise wird zweckmäßig ein statischer Mischer mit nachgeschaltetem Verweilzeitbehälter verwendet, während bei diskontinuierlicher Arbeitsweise die Fällung in einem Rührbehälter vorgenommen wird. In beiden Fällen wird im Fällungsraum eine Schwefelwasserstoffatmosphäre aufrechterhalten. Es hat sich gezeigt, daß das Ziel des Verfahrens, das Arsen bis auf Restgehalte unter 0,1 mg/l, insbesondere unter 0,05 mg/l, als Arsentrisulfid ($Ag_2S_3$) auszufällen, bei Einhaltung einer Nachreaktionszeit unter $H_2S$-Atmosphäre von 30 bis 120 min, vorzugsweise 45 bis 80 min, erreicht wird.

Das ausgefällte Arsentrisulfid ($As_2S_3$) ist sehr feinteilig und schwer filtrierbar.

Vor der Filtration wird durch die Arsentrisulfid enthaltende Reaktionslösung, die noch mit Schwefelwasserstoff gesättigt ist, Luft hindurchgeleitet, um den Schwefelwasserstoff weitgehend zu entfernen. Dabei wird die Luftmenge so bemessen, daß sich der $H_2S$-Gehalt der austretenden Luft in jedem Fall unterhalb der Explosionsgrenze befindet. Das Ausblasen kann in geeigneten Vorrichtungen, wie Ausblasesäulen vorgenommen werden, die auch zu mehreren hintereinandergeschaltet sein können. Das Ausblasen wird nur so weit vorgenommen, bis die Suspension $H_2S$-geruchsfrei ist. Längeres Ausblasen führt zur Wiederauflösung von Arsen.

Das $H_2S$-haltige Abgas wird verbrannt, zweckmäßig beispielsweise in den Röstöfen einer Schwefelsäurefabrik, wenn die arsenhaltige Abfallschwefelsäure einer solchen entstammt.

Aus der im wesentlichen $H_2S$-freien Suspension wird das Arsentrisulfid sofort mechanisch abgetrennt, da bei längerer Standzeit Wiederauflösung von Arsen eintreten kann. Eine Wiederauflösung von Arsentrisulfid wird auch durch Zusatz von 0,1 bis 1 %, vorzugsweise 0,5 %, Natriumthiosulfat, vorzugsweise als 40 %ige Lösung, zur $As_2S_3$-Suspension verhindert.

Besonders vorteilhaft kann die Wiederauflösung des gefällten Arsensulfids durch einen Zusatz von Natriumsulfid verhindert werden. Zweckmäßig wird hierzu eine wäßrige Lösung von Natriumsulfid einer Konzentration von 50 bis 100 g $Na_2S/l$ verwendet. Die $Na_2S$-Lösung wird in solchen Mengen zugesetzt, daß in der Suspension eine Sulfidionenkonzentration von 300 bis 600, vorzugsweise 500 mg $S^{2-}/l$ vorliegt. Anstelle von frisch bereiteter $Na_2S$-Lösung kann auch nichtausgeblasene $As_2S_3$-Suspension mit 1 300 bis 1 700 mg $S^{2-}/l$ zur Einstellung der erforderlichen Sulfidionenkonzentration vor der Filtration verwendet werden.

Der feinteilige Arsentrisulfidniederschlag ist im allgemeinen schwer filtrierbar. Durch Zugabe eines Filtrationshilfsmittels, wie Diatomeenerde, wird die Filtration erheblich verbessert. Zweckmäßig erfolgt die Abtrennung des Niederschlags auch über Filterpressen. Das Filtrationshilfsmittel kann auch als Anschlämmschicht auf das Filtrationsaggregat, wie Filterpresse, aufgebracht werden.

Der Filterkuchen enthält im wesentlichen Arsentrisulfid und Filtrationshilfsmittel und kann entweder zu einer Aufarbeitung des Arseninhalts zu anderen Arsenverbindungen verwendet werden, oder wird einer geordneten Sonderdeponie zugeführt.

Die im wesentlichen entarsenierte Abfallschwefelsäure hat einen Arsengehalt von in aller Regel unter 0,05 mg/l und kann somit in weiteren Prozessen verwendet werden. Beispielsweise kann eine derartige entarsenierte Abfallschwefelsäure durch Mischen mit Oleum auf eine Säurekonzentration eingestellt werden, die als Aufschlußsäure von $TiO_2$-Rohstoffen bei der Titandioxidherstellung Verwendung findet.

Der Vorteil des erfindungsgemäßen Verfahrens ist darin zu sehen, daß die zur praktisch quantitativen Fällung des Arsens notwendige Sulfidionenkonzentration in technisch ebenso sicherer wie einfacher Weise erreicht wird und Abscheidegrade des Arsens von über 99 % erzielt werden.

Die Erfindung wird anhand der Beispiele näher und beispielhaft erläutert.

## Beispiel 1

In einem Rührbehälter wurde Waschsäure aus einer Pyritanlage eingegeben. Die Waschsäure enthielt ca. 22 % freie Schwefelsäure und 3,5 g Arsen/l. Entsprechend dem Arsengehalt der Abfallschwefelsäure wurde eine wässrige Lösung von Natriumsulfid mit einem überstöchiometrischen Gehalt von 65 g/l $Na_2S$ hergestellt. Diese Lösung wurde sodann durch Einleiten von Schwefelwasserstoff behandelt und das Natriumsulfid zu Natriumhydrogensulfid umgesetzt, so daß die Fällungslösung ein Gemisch aus 23 % $Na_2S$ und 77 % NaHS enthielt. Diese Lösung wurde unter Rühren bei Raumtemperatur in die arsenhaltige Abfallschwefelsäure eingegeben. Die Fällung war nach 1 Stunde beendet. Aus der Fällungslösung wurde der gelöste Schwefelwasserstoff ausgeblasen. Hierzu wurde über Düsen am Boden des Rührbehälters so lange Preßluft eingeblasen, bis in der Suspension qualitativ kein Schwefelwasserstoff mehr nachweisbar war. Nach Zusatz von Diatomeenerde als Filtershilfsmittel in einer Menge von 1 %, bezogen auf die Suspensionsmenge, wurde über eine Filterpresse filtriert. Das ablaufende Filtrat hatte einen As-Gehalt von 0,1 mg/l (Abscheidegrad über 99 %). Der Filterkuchen enthielt noch 75 % anhaftende Säure.

## Beispiel 2

Eine Abfallschwefelsäure der in Beispiel 1 angegebenen Zusammensetzung wurde mit einer Fällungslösung der in Beispiel 1 beschriebenen Art kontinuierlich umgesetzt. Zu diesem Zweck wurden die beiden Lösungen kontinuierlich in einen statischen Mischer eingeführt, dem ein Verweilzeitbehälter nachgeschaltet war. Nach einer Verweilzeit von 1 Stunde unter reiner $H_2S$-Atmosphäre waren 99 % des Arsengehaltes in der Abfallschwefelsäure als Arsentrisulfid abgeschieden. Aus dem Reaktionsgemisch wurde der Schwefelwasserstoff durch Einblasen von Luft entfernt, Diatomeenerde als Filtrationsmittel zugesetzt und über eine Filterpresse filtriert. Die Abfallschwefelsäure enthielt weniger als 0,1 mg As/l.

## Beispiel 3

In diesem Beispiel wird in Laboratoriumsversuchen die Überlegenheit der Arsensulfidfällung mit überstöchiometrischen Mengen Natriumsulfid bei verschiedenen Arsenkonzentrationen veranschaulicht. Hierbei werden Fällungslösungen von Natriumsulfid verwendet im Vergleich zu Fällungslösungen mit einem Gemisch aus 23 % $Na_2S$ und 77 % NaHS. Die verschiedenen Arsenkonzentrationen der Abfallschwefelsäure wurden durch Zusatz von Natriumarsenit eingestellt. Es zeigt sich, daß bei allen untersuchten Arsenkonzentrationen mit der erfindungsgemäßen Arbeitsweise verbesserte Abscheidungsgrade von über 99,8 % erzielt werden.

(Siehe Tabelle Seite 4 f.)

| As-Gehalt Ausgangssäure g/l | Fällung mit Lösung enthaltend | | | |
|---|---|---|---|---|
| | $Na_2S$ mg/l As-Restgehalt | % Absch. | 23% $Na_2S$ 77% NaHS mg/l As-Restgehalt | % Abscheidung |
| 1,38 | 90 | 93,2 | 2,5 | 99,8 |
| 2,0 | 78 | 95,9 | 0,24 | 99,9 |
| 3,9 | 190 | 94,6 | 0,4 | 99,9 |
| 5,9 | 60 | 98,8 | 0,04 | 99,9 |

Beispiel 4

Zur Verhinderung der Wiederauflösung des gefällten Arsensulfids wurde der $As_2S_3$-Suspension jeweils eine wäßrige Lösung von Natriumsulfid bzw. Natriumthiosulfat zugegeben. Die jeweiligen Arsensulfidsuspensionen, mit und ohne Sulfidierungsmittel, wurden mehrere Stunden bei Raumtemperatur gerührt. In bestimmten Zeitabständen wurde eine Probe entnommen und hierzu der Gehalt an gelöstem Arsen bestimmt. In der nachstehenden Tabelle sind die Gehalte an gelöstem Arsen in mg As/l in Abhängigkeit von der Standzeit und dem jeweiligen Zusatz aufgeführt:

| Standzeit in Stunden | kein Zusatz mg As/l | $Na_2S$-Zusatz (600 mg $S^{2-}$/l) mg As/l | $Na_2S_2O_3$-Zusatz (1%) mg As/l |
|---|---|---|---|
| 0 | 0,1 | 0,1 | 0,1 |
| 2 | 0,27 | 0,1 | 0,1 |
| 4 | 1,79 | 0,1 | 0,1 |
| 24 | 6,25 | 0,1 | 0,1 |
| 72 | 12,1 | 0,1 | 0,1 |

Im kontinuierlichen Betrieb und bei Einsatz einer Filterpresse wurde nach mehreren Stunden ein Anstieg des Anteils an gelöstem Arsen auf 4 bis 5 mg/l gemessen. Bei Zusatz von $Na_2S$-Lösung bzw. $Na_2S_2O_3$-Lösung blieb der Gehalt an gelöstem Arsen unter 0,1 mg/l.

**Patentansprüche**

1. Verfahren zur Entfernung von Arsen aus Abfallschwefelsäuren durch Fällen des Arsens als Sulfid mit einem Sulfidierungsmittel und Abtrennen des Arsensulfids unter Mitverwendung von Filtrationshilfsmitteln, dadurch gekennzeichnet, daß unter Aufrechterhaltung einer $H_2S$-Atmosphäre als Sulfidierungsmittel eine wässrige Lösung eines Gemisches aus Natriumsulfid und Natriumhydrogensulfid verwendet wird, wobei die Menge des Natriumsulfids, auf den Arsengehalt der Abfallschwefelsäure bezogen, überstöchiometrisch eingestellt wird.

2. Verfahren nach Anspruch 1, dadurch gekennzeichnet, daß die Fällungssuspension zur Vervollständigung der Ausfällung des Arsens 30 bis 120 min, vorzugsweise 45 bis 80 min, unter reiner $H_2S$-Atmosphäre, gegebenenfalls unter Rühren, gehalten wird.

3. Verfahren nach den Ansprüchen 1 bis 2, dadurch gekennzeichnet, daß eine Abfallsäure mit einem Gehalt an freier Schwefelsäure von 10 bis 30, vorzugsweise 20 bis 25 %, behandelt wird.

4. Verfahren nach den Ansprüchen 1 bis 3, dadurch gekennzeichnet, daß Abfallsäuren mit Arsengehalten von 1 bis 10 g As/l behandelt werden.

5. Verfahren nach den Ansprüchen 1 bis 4, dadurch gekennzeichnet, daß vor der Filtration des gefällten Arsensulfids der Schwefelwasserstoff aus der Suspension ausgeblasen wird.

6. Verfahren nach den Ansprüchen 1 bis 5, dadurch gekennzeichnet, daß als Filtrationshilfsmittel Diatomeenerde verwendet wird.

7. Verfahren nach den Ansprüchen 1 bis 6, dadurch gekennzeichnet, daß 0,1 bis 1 %, vorzugsweise 0,5 %, Natriumthiosulfat, vorzugsweise als 40 %ige Lösung, der $As_2S_3$-Suspension zugesetzt wird.

8. Verfahren nach den Ansprüchen 1 bis 6, dadurch gekennzeichnet, daß durch Zusatz einer Natriumsulfidlösung, enthaltend 50 bis 100 g $Na_2S/l$, zur $As_2S_3$-Suspension vor der Filtration eine Sulfidionenkonzentration von 300 bis 600, vorzugsweise 500, mg/l eingestellt wird.

## Claims

1. A process for removing arsenic from waste sulphuric acid by precipitating the arsenic as sulphide by means of a sulphiding agent and separating the arsenic sulphide with the assistance of filter aids, characterised in that, while maintaining an $H_2S$-atmosphere, an aqueous solution of a mixture of sodium sulphide and sodium hydrogen sulphide is used as sulphiding agent, the amount of sodium sulphide, relative to the arsenic content of the waste sulphuric acid being adjusted to be overstoichiometric.

2. A process according to Claim 1, characterised in that in order to complete the precipitation of the arsenic the precipitate suspension is maintained under a pure $H^2S$-atmosphere for 30 to 120 minutes, preferably for 45 to 80 minutes, if necessary with stirring.

3. A process according to Claim 1 or 2, characterised in that a waste acid is treated which has a free sulphuric acid content of 10 to 30, preferably 20 to 25 %.

4. A process according to Claims 1 to 3, characterised in that waste acids are treated which contain 1 to 10 g As/l.

5. A process according to Claims 1 to 4, characterised in that the hydrogen sulphide is blown out of the suspension before the filtration of the precipitated arsenic sulphide.

6. A process according to Claims 1 to 5, characterised in that diatomaceous earth is used as filter aid.

7. A process according to Claims 1 to 6, characterised in that 0.1 to 1 %, preferably 0.5 % of sodium thiosulphate, preferably as a 40 % solution is added to the $As_2S_3$ suspension.

8. A process according to Claims 1 to 6, characterised in that a sulphide ion concentration of 300 to 600, preferably 500 mg/l is adjusted by the addition of a sodium sulphide solution containing 50 to 100 g $Na_2S/l$ to the $As_2S_3$ suspension before the filtration.

## Revendications

1. Procédé d'élimination de l'arsenic d'acides sulfuriques résiduaires, par précipitation de l'arsenic, sous forme de sulfure, par un agent de sulfuration et par séparation du sulfure d'arsenic, en utilisant des adjuvants de filtration, caractérisé en ce qu'il consiste à utiliser, comme agent de sulfuration et tout en maintenant une atmosphère de $H_2S$, une solution aqueuse d'un mélange de sulfure de sodium et d'hydrogénosulfure de sodium, en réglant la quantité du sulfure de sodium rapportée à la teneur en arsenic de l'acide sulfurique résiduaire à une valeur supérieure à la stœchiométrie.

2. Procédé suivant la revendication 1, caractérisé en ce qu'il consiste à maintenir la suspension de précipitation, afin de compléter la précipitation de l'arsenic, sous atmosphère de $H_2S$ pur, pendant 30 à 120 minutes et, de préférence, pendant 45 à 80 minutes, le cas échéant sous agitation.

3. Procédé suivant la revendication 1 ou 2, caractérisé en ce qu'il consiste à traiter un acide résiduaire ayant une teneur en acide sulfurique libre de 10 à 30 et, de préférence, de 20 à 25 %.

4. Procédé suivant l'une des revendications 1 à 3, caractérisé en ce qu'il consiste à traiter des acides résiduaires ayant des teneurs en arsenic de 1 à 10 g d'As/l.

5. Procédé suivant l'une des revendications 1 à 4, caractérisé en ce qu'il consiste à chasser l'hydrogène sulfuré de la suspension par insufflation, avant la filtration du sulfure d'arsenic précipité.

6. Procédé suivant l'une des revendications 1 à 5, caractérisé en ce qu'il consiste à utiliser comme adjuvant de filtration de la terre de diatomées.

7. Procédé suivant l'une des revendications 1 à 6, caractérisé en ce qu'il consiste à ajouter à la suspension d'$As_2S_3$ de 0,1 à 1 % et, de préférence 0,5, de thiosulfate de sodium de préférence sous forme d'une solution à 40 %.

8. Procédé suivant l'une des revendications 1 à 7, caractérisé en ce qu'il consiste à établir une concentration d'ions sulfure de 300 à 600, de préférence de 500 mg/l, par addition d'une solution de sulfure de sodium contenant de 50 à 100 g de $Na_2S/l$ à la suspension d'$As_2S_3$, avant la filtration.